# EUROPEAN PATENT APPLICATION

(11) **EP 4 801 171 A2**
(43) Date of publication of application: **02.09.2026**
(21) Application number: 26192185.2
(22) Date of filing: 03.11.2022
(51) Int. Cl.: H04W 72/232

(54) **TERMINAL DEVICE AND NETWORK DEVICE FOR TRANSMISSION OF DCI**

(62) Document number(s) of the earlier application(s) in accordance with Art. 76 EPC: 22963983.6 / 4 529 328
(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); LIANG, Bin, Dongguan, Guangdong 523860 (CN)
(74) Representative: Novagraaf Technologies

(57) **Abstract**

Provided is a terminal device and a network device for transmission of downlink control information (DCI). The terminal device includes: a processor and a memory storing one or more executable instructions; wherein the processor, when loading and executing the one or more executable instructions, causes the terminal device to: receive first DCI, which is used for scheduling N data channels. The N data channels correspond to N cells in a first cell combination, N being a positive integer. The first DCI includes: a cell combination indicator field indicating the first cell combination from P cell combinations corresponding to a first cell set, P being a positive integer; and a cell set indicator field indicating the first cell set from at least one cell set, wherein a number of bits of the cell set indicator field is determined based on a number of the at least one cell set.

## Description

### TECHNICAL FIELD

The present disclosure relates to the technical field of communications, and in particular, relates to a terminal device and a network device for transmission of downlink control information (DCI).

### BACKGROUND

A physical downlink control channel (PDCCH) carries DCI, and the DCI indicates schedule information of a physical downlink shared channel (PDSCH) or a physical uplink shared channel (PUSCH).

### SUMMARY

Embodiments of the present disclosure provide a terminal device and a network device for transmission of DCI. The technical solutions are as follows.

According to some embodiments of the present disclosure, a terminal device is provided. The terminal device includes: a processor, a transceiver connected to the processor, and a memory storing one or more executable instructions; wherein the processor, when loading and executing the one or more executable instructions cause the terminal device to: receive first DCI, wherein the first DCI is used for scheduling N data channels, wherein the N data channels correspond to N cells in a first cell combination, N being a positive integer. The first DCI includes a cell combination indicator field, wherein the cell combination indicator field indicates the first cell combination from P cell combinations corresponding to a first cell set, wherein P is a positive integer; and a cell set indicator field, wherein the cell set indicator field indicates the first cell set from at least one cell set, and a number of bits of the cell set indicator field is determined based on a number of the at least one cell set.

According to some embodiments of the present disclosure, a network device is provided. The network device includes a processor, a transceiver connected to the processor, and a memory storing one or more executable instructions; wherein the processor, when loading and executing the one or more executable instructions cause the network device to: transmit first DCI, wherein the first DCI is used for scheduling N data channels, wherein the N data channels correspond to N cells in a first cell combination, N being a positive integer. The first DCI includes a cell combination indicator field, wherein the cell combination indicator field indicates the first cell combination from P cell combinations corresponding to a first cell set, wherein P is a positive integer; and a cell set indicator field, wherein the cell set indicator field indicates the first cell set from at least one cell set, and a number of bits of the cell set indicator field is determined based on a number of the at least one cell set.

### BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a schematic diagram of a communication system in some practices according to some embodiments of the present disclosure;
FIG. 2 is a flowchart of a method for scheduling a data channel according to some embodiments of the present disclosure;
FIG. 3 is a flowchart of a method for scheduling a data channel according to some embodiments of the present disclosure;
FIG. 4 is a flowchart of a method for scheduling a data channel according to some embodiments of the present disclosure;
FIG. 5 is a flowchart of a method for scheduling a data channel according to some embodiments of the present disclosure;
FIG. 6 is a flowchart of a method for scheduling a data channel according to some embodiments of the present disclosure;
FIG. 7 is a flowchart of a method for scheduling a data channel according to some embodiments of the present disclosure;
FIG. 8 is a flowchart of a method for scheduling a data channel according to some embodiments of the present disclosure;
FIG. 9 is a flowchart of a method for scheduling a data channel according to some embodiments of the present disclosure;
FIG. 10 is a flowchart of a method for scheduling a data channel according to some embodiments of the present disclosure;
FIG. 11 is a flowchart of a method for scheduling a data channel according to some embodiments of the present disclosure;
FIG. 12 is a flowchart of a method for scheduling a data channel according to some embodiments of the present disclosure;
FIG. 13 is a flowchart of a method for scheduling a data channel according to some embodiments of the present disclosure;
FIG. 14 is a flowchart of a method for scheduling a data channel according to some embodiments of the present disclosure;
FIG. 15 is a flowchart of a method for scheduling a data channel according to some embodiments of the present disclosure;
FIG. 16 is a flowchart of a method for scheduling a data channel according to some embodiments of the present disclosure;
FIG. 17 is a flowchart of a method for scheduling a data channel according to some embodiments of the present disclosure;
FIG. 18 is a flowchart of a method for scheduling a data channel according to some embodiments of the present disclosure;
FIG. 19 is a structural block diagram of an apparatus for scheduling a data channel according to some embodiments of the present disclosure;
FIG. 20 is a structural block diagram of an apparatus for scheduling a data channel according to some embodiments of the present disclosure; and
FIG. 21 is a structural block diagram of a communication device according to some embodiments of the present disclosure.

### DETAILED DESCRIPTION

For clearer descriptions of the objectives, technical solutions, and advantages of the present disclosure, embodiments of the present disclosure are further described in detail below with reference to the accompanying drawings. The exemplary embodiments are described in detail herein, and examples are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with certain aspects of the present disclosure, as detailed in the appended claims.

The terms used in the present disclosure are used for the purpose of describing particular embodiments only. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used herein to describe various pieces of information. These terms are only used to distinguish one type of information from another. For example, a first parameter may also be referred to as a second parameter, and similarly, a second parameter is also referred to as a first parameter. The word "if," as used herein, may be interpreted as "in the case that," "in the case of," or "in response to determining that," depending on the context.

Some key terms in the present disclosure are described as follows.

### 1. Multi-cell scheduling

A multi-carrier scheduling work project supports that a piece of DCI schedules PDSCHs or PUSCHs of a plurality of cells, and a DCI format is 0_X/1_X. A piece of DCI co-schedules a plurality of scheduled cells. All scheduled cells and scheduling cells need to be within the same physical uplink control channel (PUCCH) group.

Concepts of a cell group, a PUCCH group, a cell set, and a cell combination are explained as follows for convenience of understanding.

**The cell group** implies a largest range among these concepts, and indicates a group of cells configured by a network side (or a network device), for example, a master cell group (MCG), and a secondary cell group (SCG).

**The PUCCH group** implies a range only smaller than the range of the cell group in the above concepts. Cells in a PUCCH group are a subset or a complete set of all cells in the cell group, a cell group includes one or two PUCCH groups, and hybrid automatic repeat request- acknowledge (HARQ-ACK) codebooks corresponding to PDSCHs in the cells in a PUCCH group are fed back in cells in the same PUCCH group.

**The cell set** implies a range smaller than the range of the PUCCH group in the above concepts. A piece of DCI schedules a group of cells, and the group of cell includes cell combinations co-schedulable by a piece of DCI. That is, the cell set is a cell set consisting of all cells in at least one cell combination. A PUCCH group includes one or more cell sets.

In some embodiments of the present disclosure, the cell and the carrier are equivalent concepts. A cell corresponds to a carrier, and a carrier corresponds to a cell. The multi-cell scheduling can be also regarded as multi-carrier scheduling.

**The cell combination or the combination of co-scheduled cells** includes N cells co-schedulable by a piece of DCI. N is a positive integer. The cell combination or the combination of co-scheduled cells is a subset or a complete set of the cell set.

### Relationship of the above concepts are illustrated as follows.

The MCG is configured for the terminal, and includes cell 1 to cell 16, that is, 16 cells. Cell 1 to cell 8 are in a PUCCH group, which is denoted as a PUCCH group 1. Cell 9 to cell 16 are in a PUCCH group, which is denoted as a PUCCH group 2.

In the case that the communication standard supports that a PUCCH group includes a plurality of cell sets, in the PUCCH group 1, the network device configures cell 1 to cell 4 as a first cell set, and configures cell 5 to cell 8 as a second cell set. The cell combination is a subset or a complete set of the first cell set {cell 1-cell 4}, or, the cell combination is a subset or a complete set of the second cell set {cell 5-cell 8}.

For example, in the first cell set, cell combinations or combinations of co-scheduled cells schedulable by a piece of DCI are listed in Table 1. Table 1 includes relationships of cell combination indexes and combinations of co-scheduled cells or cell combinations.

**Table 1 Cell combinations schedulable by a piece of DC in the first cell set**

| Cell combination index | Co-scheduled cells/Cell combination |
|---|---|
| 1 | cell 1+cell 2 |
| 2 | cell 3+cell 4 |
| 3 | cell 1+cell 2+cell 3 |
| 4 | cell 2+cell 3+cell 4 |
| 5 | cell 1+ cell 2+cell 3+cell 4 |

### 2. Cross-carrier scheduling

The new radio (NR) supports the cross-carrier scheduling, that is, the scheduling cell and the scheduled cell are not the same cell. Cross-carrier scheduling configuration information element (IE CrossCarrierSchedulingConfig) is used to configure the scheduling relationship of the cross-carrier scheduling. That is, the information element (IE) can configure information of the scheduling cell corresponding to the scheduled cell and a value of a Carrier Indicator field (CIF) corresponding to the scheduled cell in the scheduling cell. The CIF is an indicator field in the DCI indicating the scheduled cell. As candidate PDCCHs (also referred to as PDCCH resources) corresponding to different scheduled cells may be overlapped, the terminal determines the scheduled cell based on the CIF after detecting the DCI from the PDCCH.

### • CrossCarrierSchedulingConfig

The IE CrossCarrierSchedulingConfig is used to specify the configuration when the cross-carrier scheduling is used in a cell.

### • CrossCarrierSchedulingConfig information element

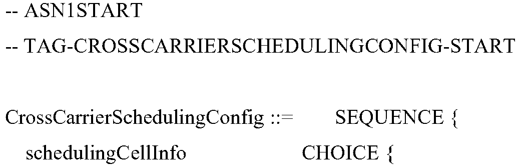

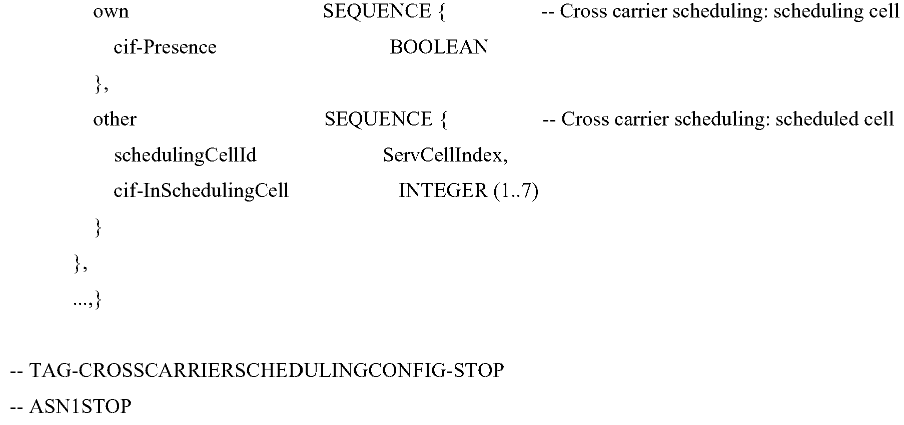

### • cif-InSchedulingCell

The field indicates the value of the CIF used in the scheduling cell to indicate a grant or assignment applicable for this cell, see TS 38.213 [13].

### 3. PDCCH resource (candidate PDCCH)

The NR determines physical resources of the PDCCH based on configuration of a control resource set (CORESET) and a search space set. After the physical resources of the PDCCH is determined, the terminal UE determines a candidate PDCCH set in the physical resources of the PDCCH by the following method.

In a PDCCH search space s, positions of the association CORESET p and the candidate PDCCH are correlated with the value of the CIF, an aggregation degree, and the number of candidate PDCCHs, and are specifically determined by the following formula: $L ⋅ \left\{\left({Y}_{p , {n}_{s , f}^{u}}+\left⌊\frac{{m}_{s , {n}_{CI}} ⋅ {N}_{CCE , p}}{L ⋅ {M}_{s , max}^{\left(L\right)}}\right⌋+{n}_{CI}\right)mod\left⌊\frac{{N}_{CCE , p}}{L}\right⌋\right\} + i$${Y}_{p , {n}_{s , f}^{u}}$ represents a start position of the candidate PDCCH in the search space s, *m*_{*s*,*n*_{CI}} represents an address of the candidate PDCCH, *n_{CI}* represents the value of the CIF, L represents the aggregation degree, *N_{CCE,p}* represents the number of CCEs in the CORESET p, ${M}_{s , max}^{\left(L\right)}$ represents the number of candidate PDCCHs corresponding to the aggregation degree L, and $\left⌊⋅\right⌋$ represents rounding down.

It can be seen from the above formula that different scheduled cells correspond to different *n_{CI}*, which can be distinguished based on dimensions of the candidate PDCCHs, and may be not completely distinguished as different *n_{CI}* values may correspond to the same candidate PDCCH due to the formula modulo.

At present, in the case that a piece of DCI schedules a plurality of cell sets, it is still unclear how the terminal determines, after performing blind detection on the PDCCH, that which cell combination in which cell set is scheduled by the DCI acquired by the blind detection.

On this basis, the embodiments of the present disclosure provide a method for scheduling a data channel and a solution for scheduling one or more cells by a piece of DCI. In the case that DCI schedules a plurality of cell sets, after the terminal performs blind detection on the DCI, the terminal can accurately determine the cell set scheduled by the DCI acquired by the blind detection and the cell combination in the cell set.

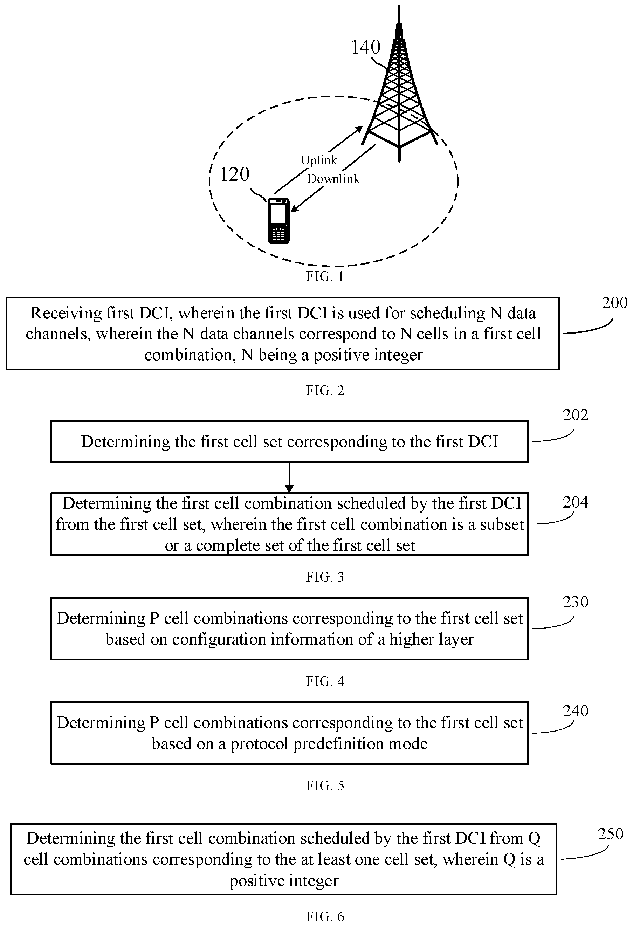

Illustratively, FIG. 1 is a schematic diagram of a communication system in some practices according to some embodiments of the present disclosure, which mainly includes a terminal 120 and a network device 140. The network device 140 transmits first DCI, and the terminal 120 receives the first DCI. The first DCI is used for scheduling N data channels. The N data channels correspond to N cells in a first cell combination. N is a positive integer.

The network device 140 in the present disclosure has a wireless communication function, and includes, but is not limited to an evolved Node B (eNB), a radio network controller (RNC), a node B (NB), a base station controller (BSC), a base transceiver station (BTS), a home station (for example, a home evolved Node B or, Home Node B (HNB)), a baseband unit (BBU), an access point (AP), a wireless relay node, a wireless return node, a transmission point (TP), or a transmission and reception point (TRP) in a wireless fidelity (Wi-Fi) system, a next generation Node B (gNB), a TRP, or a TP in a 5^{th} Generation (5G) mobile communication system, one or a set (including a plurality of antenna panels) antenna panels of a station in a 5G system, a network node consisting a gNB or a TP (for example, a baseband unit (BBU), a distributed unit (DU), and the like), a station in a beyond fifth generation (B5G) or a 6^{th} Generation (6G) mobile communication system, a core network (CN), a fronthaul, a backhaul, a radio access network (RAN), a network slice, or a service cell, a primary cell (PCell), a primary secondary cell (PSCell), a special cell (SpCell), a secondary cell (SCell), or a neighbor cell of a terminal device.

The terminal 120 in the present disclosure is also referred to as a terminal device, a user equipment (UE), an access terminal, a subscriber unit, a subscriber station, a rover station, a mobile station, a remote station, a remote terminal, a mobile device, a user terminal, a terminal, a wireless communication device, a user agent, or a user apparatus. The terminal includes, but is not limited to, a handheld devices, wearable devices, in-vehicle devices, Internet of thing (IoT) devices, and the like, for example, a mobile phone, a tablet, an e-reader, a laptop, a desktop computer, a television, a game console, a mobile Internet device (MID), an augmented reality (AR) terminal, a virtual reality (VR) terminal, a mixed reality (MR) terminal, a wearable device, a hand shank, an electronic tag, a controller, a wireless terminal in the context of industry control, a wireless terminal in the context of self-driving, a wireless terminal in the context of remote medical, a wireless terminal in the context of smart gride, a wireless terminal in the context of transportation safety, a wireless terminal in the context of smart city, a wireless terminal in the context of smart home, a wireless terminal in the context of remove medical surgery, a cellular phone, a cordless phone, a Session Initiation Protocol (SIP) phone, a wireless local loop (WLL) station, a personal digital assistant (PDA), a TV set-top box (STB), a customer premise equipment (CPE), and the like.

The network device 140 is in communication with the terminal 120 over an air interface technology, for example, over a Uu interface.

In some embodiments, communications between the network device 140 and the terminal 120 includes two communication scenarios, that is, an uplink communication scenario and a downlink communication scenario. Signals are transmitted to the network device 140 in the uplink communication scenario, and signals are transmitted to the terminal 120 in the downlink communication scenario.

The technical solutions according to the embodiments of the present disclosure are applicable to various communication systems, for example, a global system of mobile communication (GSM), a code-division multiple access (CDMA) system, a wideband code-division multiple access (WCDMA) system, a general packet radio service (GPRS) system, a long-term evolution (LTE) system, an LTE frequency-division duplex (FDD) system, an LTE time-division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a wireless local area network (WLAN), a wireless fidelity (Wi-Fi), a cellular IoT system, a cellular passive IoT system, evolution systems of the 5G NR system, and evolution systems of the 6G NR system. In some embodiments of the present disclosure, the "NR" is also referred to as a 5G NR system or a 5G system. The 5G mobile communication system includes a non-standalone (NSA) network and/or a standalone (SA) network.

The technical solutions according to the embodiments of the present disclosure are also applicable to machine-type communications (MTC), a long-term evolution-machine (LTE-M) technology, a device-to-device (D2D) network, a machine-to-machine (M2M) network, an IoT network, or other networks. The IoT network includes, for example, Internet of vehicles. Communication modes in the Internet of vehicles system are collectively referred to as vehicle-to-X (V2X, X represents anything). For example, the V2X includes (vehicle-to-vehicle (V2V) communications, vehicle-to-infrastructure (V2I) communications, vehicle-to-pedestrian (V2P) or vehicle-to-network (V2N) communications, and the like.

FIG. 2 is a flowchart of a method for scheduling a data channel according to some embodiments of the present disclosure. The embodiments are illustrated using an example where the method for scheduling the data channel is implemented by the terminal 120 shown in FIG. 1. The method includes at least part of the following processes.

**In S200**, first DCI is received, wherein the first DCI is used for scheduling N data channels, wherein the N data channels correspond to N cells in a first cell combination, N being a positive integer.

The DCI is carried over the PDCCH, and indicates scheduling information of the PDSCH or the PUSCH on the terminal. The scheduling information includes at least one of time domain resource allocation, frequency domain resource allocation, a modulation and coding scheme (MCS) format, or the like.

In some embodiments, a piece of DCI schedules PDSCHs or PUSCHs of one or more cells. That is, a piece of DCI corresponds to one or more cells concurrently, and the one or more cells are referred to as a cell combination. The cell combination is a subset or a complete set of a cell set or a subset or a complete set of a PUCCH group of a cell set.

For example, the cell group includes cell 1, cell 2, cell 3, and cell 4. In the case that a piece of DCI co-schedules one or more cells, cell combinations schedulable by the piece of DCI include, but are not limited to the following combinations: cell 1, cell 2, cell 3, cell 1+cell 2, cell 3+cell 4, cell 1+cell 2+cell 3, cell 2+cell 3+cell 4, and cell 1+cell 2+cell 3+cell 4.

In some embodiments, the network device transmits the first DCI to the terminal, and the first DCI is DCI received by the terminal and is used for scheduling the first cell combination. The first cell combination includes N cells. N is a positive integer.

For example, the cell group includes cell 1, cell 2, cell 3, and cell 4. The terminal receives the first DCI, and the first DCI is used for scheduling the first cell combination. Assuming that the first cell combination is cell 1+cell 2+cell 3, then the first cell combination includes three cells.

In some embodiments, the first DCI is used for scheduling N data channels. The data channel includes a PDSCH or a PUSCH, and the N data channels include N PDSCHs or N PUSCHs and are in one-to-one correspondence to N cells in the first cell combination. N is a positive integer.

For example, the cell group includes cell 1, cell 2, cell 3, and cell 4. The terminal receives the first DCI. Assuming that the first cell combination is cell 1+cell 2+cell 3, then the first DCI is used for scheduling three data channels, that is, channel A, channel B, and channel C. Channel A corresponds to cell 1 in the first cell combination, channel B corresponds to cell 2 in the first cell combination, and channel C corresponds to cell 3 in the first cell combination.

In some embodiments, the terminal performs blind detection on the PDCCH, and the first SCI acquired by the blind detection is parsed to determine the N data channels scheduled by the first SCI. The N data channels correspond to N cells in the first cell combination. N is a positive integer.

In summary, in the method according to the embodiments of the present disclosure, the terminal receives the first DCI. The first DCI is used for scheduling N data channels. The N data channels correspond to N cells in the first cell combination. N is a positive integer. The method according to the embodiments of the present disclosure provides a solution for scheduling one or more cells by a piece of DCI, such that the terminal can accurately determine one or more cells scheduled by the piece of DCI.

S200 may be practiced in at least two implementations.

In a first implementation, the terminal first determines the first cell set corresponding to the first DCI, and then determines the first cell combination corresponding to the first DCI from N cell combinations in the first cell set. N is a positive integer.

In some embodiments, the first DCI includes a cell combination indicator field, and the cell combination indicator field indicates the first cell combination.

In some embodiments, the cell combination indicator field indicates the first cell combination from P cell combinations corresponding to the first cell set. P is a positive integer.

In some embodiments, the first DCI includes a cell set indicator field, and the cell set indicator field indicates the first cell set from at least one cell set.

In some embodiments, the at least one cell set includes at least two cell sets. In some embodiments, the at least two cell sets belong to the same PUCCH group.

In some embodiments, the first DCI includes a cell set indicator field, and the cell set indicator field indicates the first cell set from the at least two cell sets.

In a second implementation, the terminal determines the first cell combination corresponding to the first DCI from Q cell combinations corresponding to the at least one cell set. Q is a positive integer.

In some embodiments, the first DCI includes the cell combination indicator field, and the cell combination indicator field indicates the first cell combination from Q cell combinations corresponding to the at least one cell set. Q is a positive integer.

In some embodiments, the cell combination indicator field indicates the first cell combination from several cell combinations corresponding to the PUCCH of the at least one cell set.

In some embodiments, the at least one cell set includes at least two cell sets. In some embodiments, the at least two cell sets belong to the same PUCCH group.

In some embodiments, the terminal determines the first cell combination corresponding to the first DCI from Q cell combinations corresponding to the at least two cell sets. Q is a positive integer.

In some embodiments, the first DCI includes the cell set indicator field. The cell set indicator field indicates the first cell set from Q cell combinations corresponding to the at least two cell sets. Q is a positive integer.

In some embodiments, the cell combination indicator field indicates the first cell combination from several cell combinations corresponding to the same PUCCH of the at least two cell sets.

In the above embodiments, in the case that the at least one cell set includes at least two cell sets, the network device transmits the first DCI, such that the signaling resource is saved.

### For the first implementation

FIG. 3 is a flowchart of a method for scheduling a data channel according to some embodiments of the present disclosure. S200 includes S202 and S204.

**In S202,** the first cell set corresponding to the first DCI is determined.

In some embodiments, in the case that a piece of DCI schedules one or more cell sets, that is, in the case that a piece of DCI schedules at least one cell set, upon receipt of the first DCI, the terminal first determines the first cell set corresponding to the first DCI. The first cell set includes one or more cell combinations.

In some embodiments, the terminal receives configuration information of a higher layer from the network device, and determines the at least one cell set based on the configuration information of the higher layer or based on a protocol predefinition mode.

The configuration information of the higher layer indicates configuration information carried in a protocol layer above the physical layer, for example, configuration information in radio resource control (RRC), a system information block (SIB), a medium access control (MAC), and the like. The protocol predefinition indicates predefinition by the communication protocol.

Each cell set in the at least one cell set is a set of cells schedulable by the first DCI or a cell set consisting of at least one cell co-schedulable by the first DCI.

In some embodiments, the first cell set is one of the at least one cell set.

In some embodiments, the first DCI includes a cell set indicator field, and the cell set indicator field indicates the first cell set from the at least one cell set.

In some embodiments, the number of bits of the cell set indicator field is determined based on the number of the at least one cell set. The number of bits of the cell set indicator field is the number of bits occupied by the cell set indicator field.

In some embodiments, the number of bits of the cell set indicator field is determined by log₂M. M is the number of the at least one cell set corresponding to the terminal.

In some embodiments, the number of bits of the cell set indicator field is acquired by rounding up log₂M, that is, $\left⌈{log}_{2} M\right⌉$*.* M is the number of cell sets in a PUCCH group of the at least one cell set. M is a positive integer.

In some embodiments, the at least one cell set belongs to the same PUCCH group.

For example, the cell group includes cell 1 to cell 16, that is, 16 cells. Cell 1 to cell 8 are in a PUCCH group, which is denoted as a PUCCH group 1. Cell 9 to cell 16 are in a PUCCH group, which is denoted as a PUCCH group 2. In the PUCCH group 1, a first cell set includes cell 1 to cell 4, and a second cell set includes cell 5 to cell 8. That is, the first cell set and the second cell set belong to the same PUCCH group, that is, the PUCCH group 1. The terminal determines the first cell combination scheduled by the first DCI from cell combinations corresponding to the at least one cell set of the PUCCH group 1.

**In S204,** the first cell combination scheduled by the first DCI is determined from the first cell set, wherein the first cell combination is a subset or a complete set of the first cell set.

In some embodiments, the first DCI includes a cell combination indicator field, and the cell combination indicator field indicates the first cell combination from P cell combinations corresponding to the first cell set. P is a positive integer.

In some embodiments, the number of bits of the cell combination indicator field is determined based on a number P of cell combinations corresponding to the first cell set. P is a positive integer.

In some embodiments, the number of bits of the cell combination indicator field is determined by log₂P. P is the number of cell combinations corresponding to the first cell set. P is a positive integer.

In some embodiments, the number of bits of the cell combination indicator field is acquired by rounding up log₂P, that is, $\left⌈{log}_{2} P\right⌉$. P is the number of cell combinations corresponding to the first cell set. P is a positive integer.

In some embodiments, in the case that the first DCI includes the cell combination indicator field, and the cell combination indicator field indicates the first cell combination from P cell combinations corresponding to the first cell set, as shown in FIG. 4 and FIG. 5, the method further includes S230 or S240.

**In S230**, the P cell combinations corresponding to the first cell set are determined based on configuration information of a higher layer.

**In S240,** the P cell combinations corresponding to the first cell set are determined based on a protocol predefinition mode.

P is a positive integer.

In some embodiments, the terminal receives the configuration information of the higher layer, and determines the P cell combinations corresponding to the first cell set based on the configuration information of the higher layer or based on the protocol predefinition mode. P is a positive integer.

For example, the cell group includes cell 1 to cell 8, that is, eight cells. Cell 1 to cell 8 are configured as two cell sets, that is, a first cell set and a second cell set. The first cell set includes cell 1 to cell 4, and the second cell set includes cell 5 to cell 8.

The terminal receives the first DCI, and the first DCI includes the cell set indicator field and the cell combination indicator field. The first cell set corresponding to the first DCI is determined based on the cell set indicator field, and the first cell set includes cell 1 to cell 4. Then, the first cell combination scheduled by the first DCI is determined from at least one cell combination corresponding to the first cell set based on the cell combination indicator field. For example, the first cell combination is cell 1+cell 2+cell 3. The first cell combination is a subset of the first cell set.

For example, the MCG is configured for the terminal, and includes cell 1 to cell 16, that is, 16 cells. Cell 1 to cell 8 are in a PUCCH group, which is denoted as a PUCCH group 1. Cell 9 to cell 16 are in a PUCCH group, which is denoted as a PUCCH group 2.

In the PUCCH group 1, the network device configures cell 1 to cell 4 as the first cell set, and configures cell 5 to cell 8 as the second cell set.

The terminal receives the first DCI, and the first DCI includes the cell set indicator field. In the case that the cell set is the above first cell set and the second cell set, that is, the number of cell sets is 2, the number of bits of the cell set indicator field is $\left⌈{log}_{2} 2\right⌉ = 1$, that is, one bit.

It is assumed that the first cell set includes four cell combinations, the second cell set includes eight cell combinations, and each cell combination has a unique serial number in each cell set. For example, the first cell set includes cell combinations 1 to 4, and the second cell set includes cell combinations 1 to 8.

The number of bits of the cell combination indicator field in the first DCI is determined by one of the following methods:
- the number of bits of the cell combination indicator field corresponding to the first cell set is $\left⌈{log}_{2} 4\right⌉ = 2$, that is, two bits; and the number of bits of the cell combination indicator field corresponding to the second cell set is $\left⌈{log}_{2} 8\right⌉ = 3$, that is, three bits;
- the number of bits of the cell combination indicator field corresponding to the first cell set and the number of bits of the cell combination indicator field corresponding to the second cell set all are $max \left\{\left⌈{log}_{2} 4\right⌉, \left⌈{log}_{2} 8\right⌉\right\} = 3$, that is, three bits.

The method in the above embodiments is most direct and simplest. The terminal first determines the first cell set corresponding to the first DCI based on the cell set indicator field in the first DCI, and then determines the first cell combination in the first cell set scheduled by the first DCI based on the cell combination indicator field in the first DCI.

### For the second implementation

In some embodiments of the present disclosure, FIG. 6 is a flowchart of a method for scheduling a data channel according to some embodiments of the present disclosure. The first cell combination scheduled by the first DCI is determined in S200. The method further includes S250.

**In S250**, the first cell combination scheduled by the first DCI is determined from Q cell combinations corresponding to the at least one cell set, wherein Q is a positive integer.

In some embodiments, the first cell combination is a subset or a complete set of the first cell set, and the first cell set is one of the at least one cell set.

In some embodiments, in the case that one or more cell sets are configured for the terminal, that is, in the case that a piece of DCI schedules cell combinations corresponding to the at least one cell set, upon receipt of the first DCI, the terminal directly determines the first cell combination scheduled by the first DCI without determining the first cell set.

In some embodiments, the terminal determines the first cell combination scheduled by the first DCI from Q cell combinations corresponding to the at least one cell set. The first cell combination is a subset of the first cell set, and the first cell set is one of the at least one cell set.

In some embodiments, the at least one cell set is all cell sets configured for the terminal, all cell sets defined for the terminal, or one or more or all cell sets in the PUCCH group of the terminal.

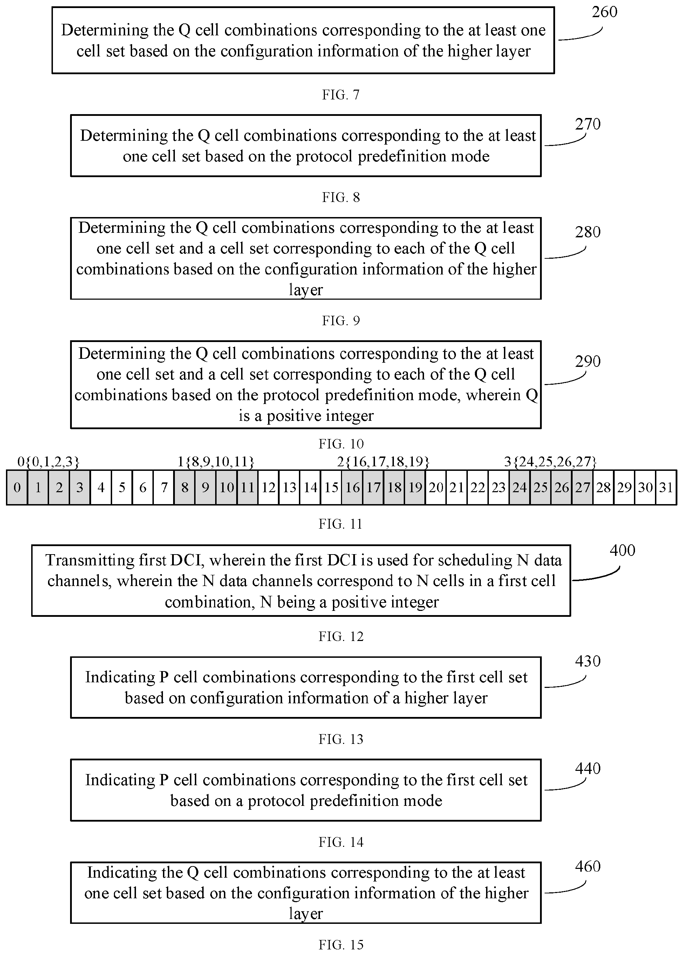

In some embodiments, in the case that the terminal determines the first cell combination scheduled by the first DCI from Q cell combinations corresponding to the at least one cell set, as shown in FIG. 7 and FIG. 8, the method further includes S260 or S270.

**In S260**, the Q cell combinations corresponding to the at least one cell set are determined based on the configuration information of the higher layer.

**In S270,** the Q cell combinations corresponding to the at least one cell set are determined based on the protocol predefinition mode.

Q is a positive integer.

In some embodiments, the Q cell combinations corresponding to the at least one cell set are appointed between the terminal and the network device based on the configuration information of the higher layer or based on the protocol predefinition mode. The Q cell combinations corresponding to the at least one cell set are listed in the table of a first cell set. Q is a positive integer.

In some embodiments, the terminal receives the configuration information of the higher layer, and determines the Q cell combinations corresponding to the at least one cell set based on the configuration information of the higher layer or based on the protocol predefinition mode. Q is a positive integer.

In some embodiments, the table of the first cell set includes cell combination indexes and cell combinations corresponding to the cell combination indexes.

In some embodiments, in the case that the terminal determines the first cell combination scheduled by the first DCI from Q cell combinations corresponding to the at least one cell set, as shown in FIG. 9 and FIG. 10, the method further includes S280 or S290.

**In S280**, the Q cell combinations corresponding to the at least one cell set and a cell set corresponding to each of the Q cell combinations are determined based on the configuration information of the higher layer.

**In S290,** the Q cell combinations corresponding to the at least one cell set and a cell set corresponding to each of the Q cell combinations are determined based on the protocol predefinition mode, wherein Q is a positive integer.

In some embodiments, the cell combinations corresponding to the at least one cell set and the cell set corresponding to each of the Q cell combinations are appointed between the terminal and the network device based on the configuration information of the higher layer or based on the protocol predefinition mode. The cell set corresponding to each of the Q cell combinations is represented by a cell set identifier (ID). The cell combinations corresponding to the at least one cell set and the cell set corresponding to each of the Q cell combinations are listed in the table of a second cell set.

In some embodiments, the table of the second cell set includes cell combination indexes, cell combinations corresponding to the cell combination indexes, and the cell set IDs corresponding to the cell combinations.

In some embodiments, the terminal receives the configuration information of the higher layer from the network device, and determines the Q cell combinations corresponding to the at least one cell set and the cell set corresponding to each of the Q cell combinations based on the configuration information of the higher layer or based on the protocol predefinition mode.

In some embodiments, the first DCI includes the cell combination indicator field, and the cell combination indicator field indicates the first cell combination from Q cell combinations corresponding to the at least one cell set. Q is a positive integer.

In some embodiments, the cell combination indicator field further indicates the first cell set corresponding to the first cell combination.

In some embodiments, the number of bits of the cell combination indicator field is determined based on a number Q of cell combinations corresponding to the at least one cell set.

In some embodiments, the number of bits of the cell combination indicator field is determined by log₂Q. Q is the number of cell combinations corresponding to the at least one cell set. Q is a positive integer.

In some embodiments, the number of bits of the cell combination indicator field is acquired by rounding up log₂Q, that is, $\left⌈{log}_{2} Q\right⌉$. Q is the number of cell combinations corresponding to the first cell set. Q is a positive integer.

In some embodiments, the at least one cell set belongs to the same PUCCH group.

For example, the cell group includes cell 1 to cell 16, that is, 16 cells. Cell 1 to cell 8 are in a PUCCH group, which is denoted as PUCCH group 1. Cell 9 to cell 16 are in a PUCCH group, which is denoted as PUCCH group 2. In the PUCCH group 1, a first cell set includes cell 1 to cell 4, and a second cell set includes cell 5 to cell 8. That is, the first cell set and the second cell set belong to the same PUCCH group, that is, the PUCCH group 1. The terminal determines the first cell combination scheduled by the first DCI from cell combinations corresponding to the at least one cell set of the PUCCH group 1.

For example, the MCG is configured for the terminal, and includes cell 1 to cell 16, that is, 16 cells. Cell 1 to cell 8 are in a PUCCH group, which is denoted as a PUCCH group 1. Cell 9 to cell 16 are in a PUCCH group, which is denoted as a PUCCH group 2.

In the PUCCH group 1, the network device configures cell 1 to cell 4 as the first cell set, and configures cell 5 to cell 8 as the second cell set.

Assuming that the first cell set includes four cell combinations, and the second cell set includes eight cell combinations, then the number of bits of the cell combination indicator field is $\left⌈{log}_{2}\left(4+8\right)\right⌉ = 4$, that is, four bits.

In some embodiments, the first DCI includes the cell combination indicator field, and the cell combination indicator field indicates the first cell combination from Q cell combinations corresponding to the at least one cell set. That is, the cell combination indicator field indicates the first cell combination from 12 cell combinations corresponding to the first cell set and the second cell set.

In the above case, the table of the first cell set includes the cell combination indexes and the cell combinations corresponding to the cell combination indexes. The serial numbers of the cell combination indexes are uncorrelated with the cell set, and the first cell set is listed in Table 2.

In some embodiments, the first DCI includes the cell combination indicator field, and the cell combination indicator field indicates the first cell combination from Q cell combinations corresponding to the at least one cell set and further indicates the first cell set corresponding to the first cell combination. That is, the cell combination indicator field indicates the first cell combination from 12 cell combinations corresponding to the first cell set and the second cell set and indicates the first cell set corresponding to the first cell combination.

In the above case, the table of the second cell set includes the cell combination indexes, the cell combinations corresponding to the cell combination indexes, and the cell set IDs corresponding to the cell combinations. The second cell set is listed in Table 3. "0" in the cell set ID indicates the first cell set, and "1" in the cell set ID indicates the second cell set.

**Table 2 First cell set**

| Cell combination index | Co-scheduled Cells/Cell combination |
|---|---|
| 1 | cell 1+cell 2 |
| 2 | cell 3+cell 4 |
| 3 | cell 1+cell 2+cell 3 |
| 4 | cell 2+cell 3+cell 4 |
| 5 | cell 5+cell 6 |
| 6 | cell 6+cell 7 |
| 7 | cell 7+cell 8 |
| 8 | cell 5+cell 8 |
| 9 | cell 5+cell 7 |
| 10 | cell 6+cell 8 |
| 11 | cell 5+cell 6+cell 7 |
| 12 | cell 6+cell 7+cell 8 |

**Table 3 Second cell set**

| Cell combination index | Co-scheduled cells/Cell combination | Cell set ID |
|---|---|---|
| 1 | cell 1+cell 2 | 0 |
| 2 | cell 3+cell 4 | 0 |
| 3 | cell 1+cell 2+cell 3 | 0 |
| 4 | cell 2+cell 3+cell 4 | 0 |
| 5 | cell 5+cell 6 | 1 |
| 6 | cell 6+cell 7 | 1 |
| 7 | cell 7+cell 8 | 1 |
| 8 | cell 5+cell 8 | 1 |
| 9 | cell 5+cell 7 | 1 |
| 10 | cell 6+cell 8 | 1 |
| 11 | cell 5+cell 6+cell 7 | 1 |
| 12 | cell 6+cell 7+cell 8 | 1 |

In the above embodiments, the terminal directly determines the first cell combination scheduled by the first DCI without determining the first cell set, such that behaviors of the terminal UE are simplified to some extent.

In some embodiments, Agreement in some practices stipulates that scheduling cells corresponding to any cell in the cell set are the same. That is, the scheduling cells corresponding to cells in the same cell set are the same. The scheduling cell is a cell where the terminal receives the DCI or a cell corresponding to a carrier of the PDCCH for carrying the DCI. That is, the terminal receives the DCI on the scheduling cell. The Agreement is as follows.

### • Agreement

Confirm below working assumption reached in RAN1#110 meeting with revision.

### • Working Assumption

For any cell within a cell set which can be co-scheduled by a DCI format 0_X/1_X, RAN1 specification supports monitoring the DCI format 0_X/1_X and DCI format 0_0/1_0, 0_1/1_1, and/or 0_2/1_2 (if supported by the UE), if configured from the same scheduling cell.

In some embodiments, the at least one cell set includes at least two cell sets, and scheduling cells corresponding to cells in the same cell set are the same; and scheduling cells corresponding to cells in different cell sets are different, or, a scheduling cell corresponding to each cell in the at least two cell sets is one of cells in the at least two cell sets.

In some embodiments, the different cell sets correspond to different scheduling cells.

In some embodiments, the at least one cell set includes at least two cell sets, scheduling cells corresponding to cells in the same cell set are the same, and the terminal does not anticipate that scheduling cells corresponding to cells in different cell sets are the same.

In some embodiments, the terminal does not anticipate that the scheduling cell corresponding to each cell in the at least two cell sets is not one of cells in the at least two cell sets.

In some embodiments, the terminal does not anticipate that the scheduling cells corresponding to cells in different cell sets are the same.

In some embodiments, the network device transmits the first DCI based on a mode anticipated by the terminal or based on a scheduling cell anticipated by the terminal. In some embodiments, in the case that the network device does not transmit the first DCI based on the mode anticipated by the terminal or based on the scheduling cell anticipated by the terminal, the subsequent process performed by the terminal is not limited in the embodiments. For example, the terminal reports an error, or processes by an error correction algorithm or a compatibility algorithm.

For example, the MCG is configured for the terminal, and includes cell 1 to cell 16, that is, 16 cells. Cell 1 to cell 8 are in a PUCCH group, which is denoted as a PUCCH group 1. Cell 9 to cell 16 are in a PUCCH group, which is denoted as a PUCCH group 2.

In the PUCCH group 1, the network device configures cell 1 to cell 4 as the first cell set, and configures cell 5 to cell 8 as the second cell set.

The network device configures that scheduling cells corresponding to all cells in the first cell set are cell x and scheduling cells corresponding to all cells in the second cell set are cell y, cell x and cell y are different cells, cell x is not necessary in the first cell set, and cell y is not necessary in the second cell set.

In the above embodiments, in the case that scheduling cells corresponding to cells in different cell sets are different, that is, in the case that PDCCH resources corresponding to different cell sets are different, the terminal determines cell sets corresponding to detected DCI by detecting DCI from different PDCCH resources. The network device distinguishes the PDCCH resources corresponding to different cell sets based on configuration limitations (the limitation is less), such that the DCI overhead is saved. Meanwhile, the network device configures different scheduling cells for different cell sets, such that the probability of PDCCH blocking configured on the same scheduling cell is reduced.

In some embodiments, in the case that the candidate PDCCH (also referred to as the PDCCH resource) is determined using Formula 1, Formula 1 is correlated with the search space set, the CORESET, and the value of the CIF.

In the case that part or all PDCCH resources corresponding to the first DCI for scheduling different cell sets are the same, and the terminal UE detects the first DCI from the PDCCH resources, the terminal UE fails to determine the first cell set scheduled by the first DCI based on the candidate PDCCHs corresponding to the first DCI.

In some embodiments, the at least one cell set includes at least two cell sets; and candidate PDCCHs corresponding to different cell sets are different, first configuration parameters corresponding to different cell sets are different, first configuration parameters corresponding to different cell sets are separately configured, first configuration parameters corresponding to different cell sets are independently configured, candidate PDCCHs determined based on first configuration parameters corresponding to different cell sets are different, or, sizes of various pieces of DCI corresponding to different cell sets are the same; wherein the first configuration parameters are used for determining the candidate PDCCHs.

In some embodiments, the at least one cell set includes at least two cell sets; and the terminal does not anticipate that candidate PDCCHs corresponding to different cell sets are the same, the terminal does not anticipate that first configuration parameters corresponding to different cell sets are the same, the terminal does not anticipate that first configuration parameters corresponding to different cell sets are uniformly configured, the terminal does not anticipate that first configuration parameters corresponding to different cell sets are configured to be the same, the terminal does not anticipate that candidate PDCCHs determined based on first configuration parameters corresponding to different cell sets are the same, or, the terminal does not anticipate that sizes of various pieces of DCI corresponding to different cell sets are different; wherein the first configuration parameters are used for determining the candidate PDCCHs.

In some embodiments, the candidate PDCCHs corresponding to different cell sets are appointed to be different based on the configuration information of the higher layer from the network device or based on the protocol predefinition mode.

In some embodiments, the network device separately or independently configures the first configuration parameters corresponding to different cell sets, such that the terminal determines that the first configuration parameters corresponding to different cell sets are different.

In some embodiments, the sizes of various pieces of DCI corresponding to different cell sets are the same.

In some embodiments, the candidate PDCCHs determined by the terminal based on the first configuration parameters corresponding to different cell sets are different.

In some embodiments, the terminal does not anticipate that the candidate PDCCHs corresponding to different cell sets are the same.

In some embodiments, the terminal does not anticipate that the first configuration parameters corresponding to different cell sets are the same.

In some embodiments, the terminal does not anticipate that the first configuration parameters corresponding to different cell sets are uniformly configured, or, the terminal does not anticipate that the first configuration parameters corresponding to different cell sets are configured to be the same.

In some embodiments, the terminal does not anticipate that the candidate PDCCHs determined based on the first configuration parameters corresponding to different cell sets are the same.

In some embodiments, the network device configures the first configuration parameters based on the mode anticipated by the terminal. In some embodiments, in the case that the network device does not configure the first configuration parameters based on the mode anticipated by the terminal, the subsequent process performed by the terminal is not limited in the embodiments. For example, the terminal reports an error, or processes by an error correction algorithm or a compatibility algorithm.

In some embodiments, the terminal does not anticipate that sizes of various pieces of DCI corresponding to different cell sets are different.

In some embodiments, the network device transmits the based on a size of DCI anticipated by the terminal. In some embodiments, in the case that the network device does not transmit the based on the size of DCI anticipated by the terminal, the subsequent process performed by the terminal is not limited in the embodiments. For example, the terminal reports an error, or processes by an error correction algorithm or a compatibility algorithm.

In some embodiments, the candidate PDCCHs being the same means that PDCCH resources are completely overlapped.

In some embodiments, the first configuration parameter includes at least one of the value of the CIF, the search space set parameter, or a control resource set parameter.

For example, the MCG is configured for the terminal, and includes cell 1 to cell 16, that is, 16 cells. Cell 1 to cell 8 are in a PUCCH group, which is denoted as a PUCCH group 1. Cell 9 to cell 16 are in a PUCCH group, which is denoted as a PUCCH group 2.

In the PUCCH group 1, the network device configures cell 1 to cell 4 as the first cell set, and configures cell 5 to cell 8 as the second cell set.

It is assumed that the first cell set and the second cell set correspond to the same search space set parameter and different values nCI of the CIF. The nCI of the first cell set is equal to 0, and the nCI of the second cell set is equal to 1. In Formula 1, assuming that Y is equal to 0, N is equal to 32, L is equal to 4, and M is equal to 4, then it is determined based Formula 1 that the PUCCH resource corresponding to the first cell set is the PDCCH in the gray part, and the PDCCH resource corresponding to the second cell set is the PDCCH in the white part (referring to FIG. 11). The PDCCH in the white part and the PDCCH resource in the gray part are different. In FIG. 11, 0 to 31 are serial numbers of the CCEs.

In the above embodiments, various pieces of DCI corresponding to different cell sets are distinguished based dimensions of the PUCCH resources, such that different cell sets are not limited to corresponding to the same scheduling cell, and the DCI overhead is saved. The first configuration parameters corresponding to different cell sets are configured by the network device, such that the PDCCH resources corresponding to different cell sets are not completely overlapped to distinguish different cell sets. It should be noted that the network device needs to coordinate more parameter configurations in the above embodiments, such that the requirement to the implementation algorithm of the configuration of the network device is high.

FIG. 12 is a flowchart of a method for scheduling a data channel according to some embodiments of the present disclosure. The embodiments are illustrated using an example where the method for scheduling the data channel is implemented by the network device 140 shown in FIG. 1. The method includes at least part of the following processes.

**In S400,** first DCI is transmitted, wherein the first DCI is used for scheduling N data channels, wherein the N data channels correspond to N cells in a first cell combination, N being a positive integer.

The DCI is carried over the PDCCH, and indicates scheduling information of the PDSCH or the PUSCH on the terminal. The scheduling information includes at least one of time domain resource allocation, frequency domain resource allocation, an MCS format, or the like.

In some embodiments, a piece of DCI schedules PDSCHs or PUSCHs of one or more cells. That is, a piece of DCI corresponds to one or more cells concurrently, and the one or more cells are referred to as a cell combination. The cell combination is a subset or a complete set of a cell set or a subset or a complete set of a PUCCH group of a cell set.

For example, the cell group includes cell 1, cell 2, cell 3, and cell 4. In the case that a piece of DCI co-schedules one or more cells, cell combinations schedulable by the piece of DCI include, but are not limited to the following combinations: cell 1, cell 2, cell 3, cell 1+cell 2, cell 3+cell 4, cell 1+cell 2+cell 3, cell 2+cell 3+cell 4, and cell 1+cell 2+cell 3+cell 4.

In some embodiments, the network device transmits the first DCI to the terminal, and the first DCI is DCI received by the terminal and is used for scheduling the first cell combination. The first cell combination includes N cells. N is a positive integer.

For example, the cell group includes cell 1, cell 2, cell 3, and cell 4. The terminal receives the first DCI, and the first DCI is used for scheduling the first cell combination. Assuming that the first cell combination is cell 1+cell 2+cell 3, then the first cell combination includes three cells.

In some embodiments, the first DCI is used for scheduling N data channels. The data channel includes a PDSCH or a PUSCH, and the N data channels include N PDSCHs or N PUSCHs and are in one-to-one correspondence to N cells in the first cell combination. N is a positive integer.

For example, the cell group includes cell 1, cell 2, cell 3, and cell 4. The terminal receives the first DCI. Assuming that the first cell combination is cell 1+cell 2+cell 3, then the first DCI is used for scheduling three data channels, that is, channel A, channel B, and channel C. Channel A corresponds to cell 1 in the first cell combination, channel B corresponds to cell 2 in the first cell combination, and channel C corresponds to cell 3 in the first cell combination.

In some embodiments, the terminal performs the blind detection on the PDCCH, and the first SCI acquired by the blind detection is parsed to determine the N data channels scheduled by the first SCI. The N data channels correspond to N cells in the first cell combination. N is a positive integer.

In summary, the network device transmits the first DCI to the terminal, and the terminal receives the first DCI. The first DCI is used for scheduling N data channels. The N data channels correspond to N cells in the first cell combination. N is a positive integer. The method according to the embodiments of the present disclosure provides a solution for scheduling one or more cells by a piece of DCIs, such that the terminal can accurately determine one or more cells scheduled by the piece of DCI.

In some embodiments of the present disclosure, in the case that a piece of DCI schedules one or more cell sets, that is, in the case that a piece of DCI schedules at least one cell set, upon receipt of the first DCI, the terminal first determines the first cell set corresponding to the first DCI. The first cell set includes one or more cell combinations.

In some embodiments, the terminal receives the configuration information of the higher layer from the network device, and determines the at least one cell set based on the configuration information of the higher layer or based on the protocol predefinition mode.

The configuration information of the higher layer indicates configuration information carried in a protocol layer above the physical layer, for example, configuration information in the RRC, the SIB, the MAC, and the like. The protocol predefinition indicates predefinition by the communication protocol.

Each cell set in the at least one cell set is a set of cells schedulable by the first DCI or a cell set consisting of at least one cell co-schedulable by the first DCI.

In some embodiments, the first cell set is one of the at least one cell set.

In some embodiments, the first DCI includes the cell set indicator field, and the cell set indicator field indicates the first cell set from the at least one cell set.

In some embodiments, the number of bits of the cell set indicator field is determined based on the number of the at least one cell set. The number of bits of the cell set indicator field is the number of bits occupied by the cell set indicator field.

In some embodiments, the number of bits of the cell set indicator field is determined by log₂M. M is the number of the at least one cell set corresponding to the terminal.

In some embodiments, the number of bits of the cell set indicator field is acquired by rounding up log₂M, that is, $\left⌈{log}_{2} M\right⌉$. M is the number of cell sets in the PUCCH group of the at least one cell set. M is a positive integer.

In some embodiments, the at least one cell set belongs to the same PUCCH group.

For example, the cell group includes cell 1 to cell 16, that is, 16 cells. Cell 1 to cell 8 are in a PUCCH group, which is denoted as a PUCCH group 1. Cell 9 to cell 16 are in a PUCCH group, which is denoted as a PUCCH group 2. In the PUCCH group 1, a first cell set includes cell 1 to cell 4, and a second cell set includes cell 5 to cell 8. That is, the first cell set and the second cell set belong to the same PUCCH group, that is, the PUCCH group 1. The terminal determines the first cell combination scheduled by the first DCI from the cell combinations corresponding to the at least one cell set of the PUCCH group 1.

In some embodiments, the first DCI includes the cell combination indicator field, and the cell combination indicator field indicates the first cell combination from P cell combinations corresponding to the first cell set. P is a positive integer.

In some embodiments, the number of bits of the cell combination indicator field is determined based on a number P of cell combinations corresponding to the first cell set. P is a positive integer.

In some embodiments, the number of bits of the cell combination indicator field is determined by log₂P. P is the number of cell combinations corresponding to the first cell set. P is a positive integer.

In some embodiments, the number of bits of the cell combination indicator field is acquired by rounding up log₂P, that is, $\left⌈{log}_{2} P\right⌉$. P is the number of cell combinations corresponding to the first cell set. P is a positive integer.

In some embodiments, in the case that the first DCI includes the cell combination indicator field, and the cell combination indicator field indicates the first cell combination from the P cell combinations corresponding to the first cell set, as shown in FIG. 13 and FIG. 14, the method further includes S430 or S440.

**In S430**, the P cell combinations corresponding to the first cell set are indicated based on configuration information of a higher layer.

**In S440,** the P cell combinations corresponding to the first cell set are indicated based on a protocol predefinition mode.

P is a positive integer.

In some embodiments, the network device transmits the configuration information of the higher layer, and the terminal receives the configuration information of the higher layer from the network device and determines the P cell combinations corresponding to the first cell set based on the configuration information of the higher layer or based on the protocol predefinition mode. P is a positive integer.

For example, the cell group includes cell 1 to cell 8, that is, eight cells. Cell 1 to cell 8 are configured as two cell sets, that is, a first cell set and a second cell set. The first cell set includes cell 1 to cell 4, and the second cell set includes cell 5 to cell 8.

The terminal receives the first DCI, and the first DCI includes the cell set indicator field and the cell combination indicator field. The first cell set corresponding to the first DCI is determined based on the cell set indicator field, and the first cell set includes cell 1 to cell 4. Then, the first cell combination scheduled by the first DCI is determined from at least one cell combination corresponding to the first cell set based on the cell combination indicator field. For example, the first cell combination is cell 1+cell 2+cell 3. The first cell combination is a subset of the first cell set.

For example, the MCG is configured for the terminal, and includes cell 1 to cell 16, that is, 16 cells. Cell 1 to cell 8 are in a PUCCH group, which is denoted as a PUCCH group 1. Cell 9 to cell 16 are in a PUCCH group, which is denoted as a PUCCH group 2.

In the PUCCH group 1, the network device configures cell 1 to cell 4 as the first cell set, and configures cell 5 to cell 8 as the second cell set.

The terminal receives the first DCI, and the first DCI includes the cell set indicator field. In the case that the cell set is the above first cell set and the second cell set, that is, the number of cell sets is 2, the number of bits of the cell set indicator field is $\left⌈{log}_{2} 2\right⌉ = 1$, that is, one bit.

It is assumed that the first cell set includes four cell combinations, the second cell set includes eight cell combinations, and each cell combination has a unique serial number in each cell set. For example, the first cell set includes cell combinations 1 to 4, and the second cell set includes cell combinations 1 to 8.

The number of bits of the cell combination indicator field in the first DCI is determined by one of the following methods:
- the number of bits of the cell combination indicator field corresponding to the first cell set is $\left⌈{log}_{2} 4\right⌉ = 2$, that is, two bits; and the number of bits of the cell combination indicator field corresponding to the second cell set is $\left⌈{log}_{2} 8\right⌉ = 3$, that is, three bits;
- the number of bits of the cell combination indicator field corresponding to the first cell set and the number of bits of the cell combination indicator field corresponding to the second cell set all are $max \left\{\left⌈{log}_{2} 4\right⌉, \left⌈{log}_{2} 8\right⌉\right\} = 3$, that is, three bits.

The method in the above embodiments is most direct and simplest. The network device transmits the DCI, and the terminal first determines the first cell set corresponding to the first DCI based on the cell set indicator field in the first DCI and then determines the first cell combination in the first cell set scheduled by the first DCI based on the cell combination indicator field in the first DCI.

In some embodiments of the present disclosure, the terminal determines the first cell combination scheduled by the first DCI from Q cell combinations corresponding to the at least one cell set. Q is a positive integer.

In some embodiments, the first cell combination is a subset or a complete set of the first cell set, and the first cell set is one of the at least one cell set.

In some embodiments, in the case that one or more cell sets are configured for the terminal, that is, in the case that a piece of DCI schedules cell combinations corresponding to the at least one cell set, upon receipt of the first DCI, the terminal directly determines the first cell combination scheduled by the first DCI without determining the first cell set.

In some embodiments, the terminal determines the first cell combination scheduled by the first DCI from Q cell combinations corresponding to the at least one cell set. The first cell combination is a subset of the first cell set, and the first cell set is one of the at least one cell set.

In some embodiments, the at least one cell set is all cell sets configured for the terminal, all cell sets defined for the terminal, or one or more or all cell sets in the PUCCH group of the terminal.

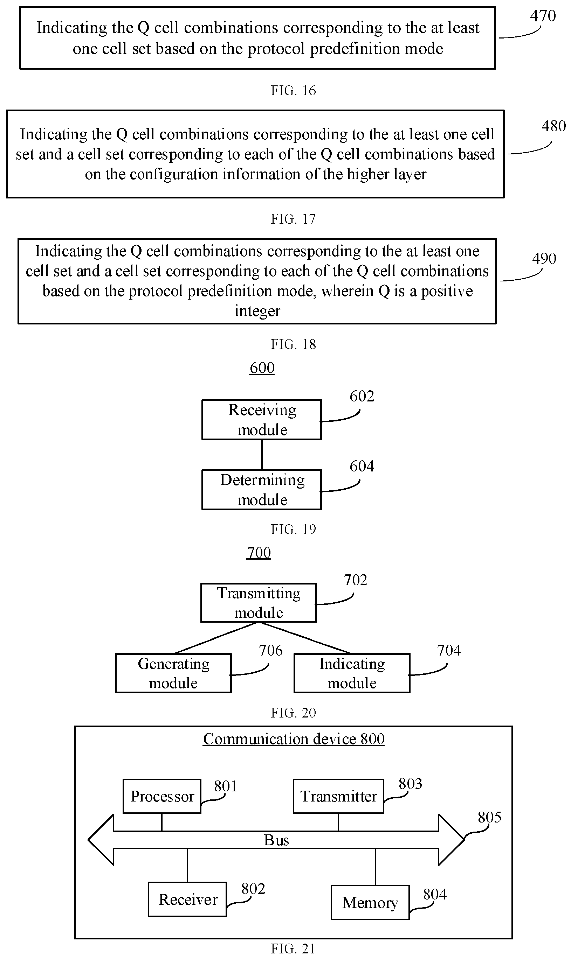

In some embodiments, in the case that the terminal determines the first cell combination scheduled by the first DCI from Q cell combinations corresponding to the at least one cell set, as shown in FIG. 15 and FIG. 16, the method further includes S260 or S270.

**In S460**, the Q cell combinations corresponding to the at least one cell set are indicated based on the configuration information of the higher layer.

**In S470,** the Q cell combinations corresponding to the at least one cell set are indicated based on the protocol predefinition mode.

Q is a positive integer.

In some embodiments, the Q cell combinations corresponding to the at least one cell set are appointed between the terminal and the network device based on the configuration information of the higher layer or based on the protocol predefinition mode. The Q cell combinations corresponding to the at least one cell set are listed in the table of the first cell set. Q is a positive integer.

In some embodiments, the terminal receives the configuration information of the higher layer, and determines the Q cell combinations corresponding to the at least one cell set based on the configuration information of the higher layer or based on the protocol predefinition mode. Q is a positive integer.

In some embodiments, the table of the first cell set includes cell combination indexes and cell combinations corresponding to the cell combination indexes.

In some embodiments, in the case that the terminal determines the first cell combination scheduled by the first DCI from Q cell combinations corresponding to the at least one cell set, as shown in FIG. 17 and FIG. 18, the method further includes S480 or S490.

**In S480**, the Q cell combinations corresponding to the at least one cell set and a cell set corresponding to each of the Q cell combinations are indicated based on the configuration information of the higher layer.

**In S490,** the Q cell combinations corresponding to the at least one cell set and a cell set corresponding to each of the Q cell combinations are indicated based on the protocol predefinition mode.

Q is a positive integer.

In some embodiments, the cell combinations corresponding to the at least one cell set and the cell set corresponding to each of the Q cell combinations are appointed between the terminal and the network device based on the configuration information of the higher layer or based on the protocol predefinition mode. The cell set corresponding to each of the Q cell combinations is represented by the cell set ID. The cell combinations corresponding to the at least one cell set and the cell set corresponding to each of the Q cell combinations are listed in the table of the second cell set.

In some embodiments, the table of the second cell set includes cell combination indexes, cell combinations corresponding to the cell combination indexes, and the cell set IDs corresponding to the cell combinations.

In some embodiments, the terminal receives the configuration information of the higher layer from the network device, and determines the Q cell combinations corresponding to the at least one cell set and the cell set corresponding to each of the Q cell combinations based on the configuration information of the higher layer or based on the protocol predefinition mode.

In some embodiments, the first DCI includes the cell combination indicator field, and the cell combination indicator field indicates the first cell combination from Q cell combinations corresponding to the at least one cell set. Q is a positive integer.

In some embodiments, the cell combination indicator field further indicates the first cell set corresponding to the first cell combination.

In some embodiments, the number of bits of the cell combination indicator field is determined based on the number Q of cell combinations corresponding to the at least one cell set.

In some embodiments, the number of bits of the cell combination indicator field is determined by log₂Q. Q is the number of cell combinations corresponding to the at least one cell set. Q is a positive integer.

In some embodiments, the number of bits of the cell combination indicator field is acquired by rounding up log₂Q, that is, $\left⌈{log}_{2} Q\right⌉$*.* Q is the number of cell combinations corresponding to the first cell set. Q is a positive integer.

In some embodiments, the at least one cell set belongs to the same PUCCH group.

For example, the cell group includes cell 1 to cell 16, that is, 16 cells. Cell 1 to cell 8 are in a PUCCH group, which is denoted as a PUCCH group 1. Cell 9 to cell 16 are in a PUCCH group, which is denoted as a PUCCH group 2. In the PUCCH group 1, a first cell set includes cell 1 to cell 4, and a second cell set includes cell 5 to cell 8. That is, the first cell set and the second cell set belong to the same PUCCH group, that is, the PUCCH group 1. The terminal determines the first cell combination scheduled by the first DCI from cell combinations corresponding to the at least one cell set of the PUCCH group 1.

For example, the MCG is configured for the terminal, and includes cell 1 to cell 16, that is, 16 cells. Cell 1 to cell 8 are a in PUCCH group, which is denoted as a PUCCH group 1. Cell 9 to cell 16 are in a PUCCH group, which is denoted as a PUCCH group 2.

In the PUCCH group 1, the network device configures cell 1 to cell 4 as the first cell set, and configures cell 5 to cell 8 as the second cell set.

Assuming that the first cell set includes four cell combinations, and the second cell set includes eight cell combinations, then the number of bits of the cell combination indicator field is $\left⌈{log}_{2}\left(4+8\right)\right⌉ = 4$, that is, four bits.

In some embodiments, the first DCI includes the cell combination indicator field, and the cell combination indicator field indicates the first cell combination from Q cell combinations corresponding to the at least one cell set. That is, the cell combination indicator field indicates the first cell combination from 12 cell combinations corresponding to the first cell set and the second cell set.

In the above case, the table of the first cell set includes the cell combination indexes and the cell combinations corresponding to the cell combination indexes. The serial numbers of the cell combination indexes are uncorrelated with the cell set, and the first cell set is listed in Table 4.

In some embodiments, the first DCI includes the cell combination indicator field, and the cell combination indicator field indicates the first cell combination from Q cell combinations corresponding to the at least one cell set and further indicates the first cell set corresponding to the first cell combination. That is, the cell combination indicator field indicates the first cell combination from 12 cell combinations corresponding to the first cell set and the second cell set and indicates the first cell set corresponding to the first cell combination.

In the above case, the table of the second cell set includes the cell combination indexes, the cell combinations corresponding to the cell combination indexes, and the cell set IDs corresponding to the cell combinations. The second cell set is listed in Table 5. "0" in the cell set ID indicates the first cell set, and "1" in the cell set ID indicates the second cell set.

**Table 4 First cell set**

| Cell combination index | Co-scheduled cells/Cell combination |
|---|---|
| 1 | cell 1+cell 2 |
| 2 | cell 3+cell 4 |
| 3 | cell 1+cell 2+cell 3 |
| 4 | cell 2+cell 3+cell 4 |
| 5 | cell 5+cell 6 |
| 6 | cell 6+cell 7 |
| 7 | cell 7+cell 8 |
| 8 | cell 5+cell 8 |
| 9 | cell 5+cell 7 |
| 10 | cell 6+cell 8 |
| 11 | cell 5+cell 6+cell 7 |
| 12 | cell 6+cell 7+cell 8 |

**Table 5: Second cell set**

| Cell combination index | Co-scheduled cells/Cell combination | Cell set ID |
|---|---|---|
| 1 | cell 1+cell 2 | 0 |
| 2 | cell 3+cell 4 | 0 |
| 3 | cell 1+cell 2+cell 3 | 0 |
| 4 | cell 2+cell 3+cell 4 | 0 |
| 5 | cell 5+cell 6 | 1 |
| 6 | cell 6+cell 7 | 1 |
| 7 | cell 7+cell 8 | 1 |
| 8 | cell 5+cell 8 | 1 |
| 9 | cell 5+cell 7 | 1 |
| 10 | cell 6+cell 8 | 1 |
| 11 | cell 5+cell 6+cell 7 | 1 |
| 12 | cell 6+cell 7+cell 8 | 1 |

In the above embodiments, the terminal directly determines the first cell combination scheduled by the first DCI based on the first cell combination indicated by the first DCI without determining the first cell set, such that behaviors of the terminal UE are simplified to some extent.

In some embodiments, Agreement in some practices stipulates that scheduling cells corresponding to any cell in the cell set are the same. That is, the scheduling cells corresponding to cells in the same cell set are the same. The scheduling cell is a cell where the terminal receives the DCI or a cell corresponding to a carrier of the PDCCH for carrying the DCI. That is, the terminal receives the DCI on the scheduling cell. The Agreement is as follows.

### • Agreement

Confirm below working assumption reached in RAN1#110 meeting with revision.

### • Working Assumption

For any cell within a cell set which can be co-scheduled by a DCI format 0_X/1_X, RAN1 specification supports monitoring the DCI format 0_X/1_X and DCI format 0_0/1_0, 0_1/1_1, and/or 0_2/1_2 (if supported by the UE), if configured from the same scheduling cell.

In some embodiments, the at least one cell set includes at least two cell sets, and scheduling cells corresponding to cells in the same cell set are the same; and scheduling cells corresponding to cells in different cell sets are different, or, a scheduling cell corresponding to each cell in the at least two cell sets is one of cells in the at least two cell sets.

In some embodiments, the different cell sets correspond to different scheduling cells.

In some embodiments, the at least one cell set includes at least two cell sets, scheduling cells corresponding to cells in the same cell set are the same, and the terminal does not anticipate that scheduling cells corresponding to cells in different cell sets are the same.

In some embodiments, the terminal does not anticipate that the scheduling cell corresponding to each cell in the at least two cell sets is not one of cells in the at least two cell sets.

In some embodiments, the terminal does not anticipate that the scheduling cells corresponding to cells in different cell sets are the same.

In some embodiments, the network device transmits the first DCI based on a mode anticipated by the terminal or based on a scheduling cell anticipated by the terminal. In some embodiments, in the case that the network device does not transmit the first DCI based on the mode anticipated by the terminal or based on the scheduling cell anticipated by the terminal, the subsequent process performed by the terminal is not limited in the embodiments. For example, the terminal reports an error, or processes by an error correction algorithm or a compatibility algorithm.

For example, the MCG is configured for the terminal, and includes cell 1 to cell 16, that is, 16 cells. Cell 1 to cell 8 are in a PUCCH group, which is denoted as a PUCCH group 1. Cell 9 to cell 16 are in a PUCCH group, which is denoted as a PUCCH group 2.

In the PUCCH group 1, the network device configures cell 1 to cell 4 as the first cell set, and configures cell 5 to cell 8 as the second cell set.

The network device configures that scheduling cells corresponding to all cells in the first cell set are cell x and scheduling cells corresponding to all cells in the second cell set are cell y, cell x and cell y are different cells, cell x is not necessary in the first cell set, and cell y is not necessary in the second cell set.

In the above embodiments, in the case that scheduling cells corresponding to cells in different cell sets are different, that is, in the case that PDCCH resources corresponding to different cell sets are different, the terminal determines cell sets corresponding to detected DCI by detecting DCI from different PDCCH resources. The network device distinguishes the PDCCH resources corresponding to different cell sets based on configuration limitations (the limitation is less), such that the DCI overhead is saved. Meanwhile, the network device configures different scheduling cells for different cell sets, such that the probability of PDCCH blocking configured on the same scheduling cell is reduced.

In some embodiments, in the case that the candidate PDCCH (also referred to as the PDCCH resource) is determined using Formula 1, Formula 1 is correlated with the search space set, the CORESET, and the value of the CIF.

In the case that part or all PDCCH resources corresponding to the first DCI for scheduling different cell sets are the same, and the terminal UE detects the first DCI from the PDCCH resources, the terminal UE fails to determine the first cell set scheduled by the first DCI based on the candidate PDCCHs corresponding to the first DCI.

In some embodiments, the at least one cell set includes at least two cell sets; and candidate PDCCHs corresponding to different cell sets are different, first configuration parameters corresponding to different cell sets are different, first configuration parameters corresponding to different cell sets are separately configured, first configuration parameters corresponding to different cell sets are independently configured, candidate PDCCHs determined based on first configuration parameters corresponding to different cell sets are different, or, sizes of various pieces of DCI corresponding to different cell sets are the same; wherein the first configuration parameters are used for determining the candidate PDCCHs.

In some embodiments, the at least one cell set includes at least two cell sets; and the terminal does not anticipate that candidate PDCCHs corresponding to different cell sets are the same, the terminal does not anticipate that first configuration parameters corresponding to different cell sets are the same, the terminal does not anticipate that first configuration parameters corresponding to different cell sets are uniformly configured, the terminal does not anticipate that first configuration parameters corresponding to different cell sets are configured to be the same, the terminal does not anticipate that candidate PDCCHs determined based on first configuration parameters corresponding to different cell sets are the same, or, the terminal does not anticipate that sizes of various pieces of DCI corresponding to different cell sets are different; wherein the first configuration parameters are used for determining the candidate PDCCHs.

In some embodiments, the candidate PDCCHs corresponding to different cell sets are appointed to be different based on the configuration information of the higher layer from the network device or based on the protocol predefinition mode.

In some embodiments, the network device separately or independently configures the first configuration parameters corresponding to different cell sets, such that the terminal determines that the first configuration parameters corresponding to different cell sets are different.

In some embodiments, the sizes of various pieces of DCI corresponding to different cell sets are the same.

In some embodiments, the candidate PDCCHs determined by the terminal based on the first configuration parameters corresponding to different cell sets are different.

In some embodiments, the terminal does not anticipate that the candidate PDCCHs corresponding to different cell sets are the same.

In some embodiments, the terminal does not anticipate that the first configuration parameters corresponding to different cell sets are the same.

In some embodiments, the terminal does not anticipate that the first configuration parameters corresponding to different cell sets are uniformly configured, or, the terminal does not anticipate that the first configuration parameters corresponding to different cell sets are configured to be the same.

In some embodiments, the terminal does not anticipate that the candidate PDCCHs determined based on the first configuration parameters corresponding to different cell sets are the same.

In some embodiments, the network device configures the first configuration parameters based on the mode anticipated by the terminal. In some embodiments, in the case that the network device does not configure the first configuration parameters based on the mode anticipated by the terminal, the subsequent process performed by the terminal is not limited in the embodiments. For example, the terminal reports an error, or processes by an error correction algorithm or a compatibility algorithm.

In some embodiments, the terminal does not anticipate that sizes of various pieces of DCI corresponding to different cell sets are different.

In some embodiments, the network device transmits the based on a size of DCI anticipated by the terminal. In some embodiments, in the case that the network device does not transmit the based on the size of DCI anticipated by the terminal, the subsequent process performed by the terminal is not limited in the embodiments. For example, the terminal reports an error, or processes by an error correction algorithm or a compatibility algorithm.

In some embodiments, the candidate PDCCHs being the same means that PDCCH resources are completely overlapped.

In some embodiments, the first configuration parameter includes at least one of the value of the CIF, the search space set parameter, or a control resource set parameter.

For example, the MCG is configured for the terminal, and includes cell 1 to cell 16, that is, 16 cells. Cell 1 to cell 8 are in a PUCCH group, which is denoted as a PUCCH group 1. Cell 9 to cell 16 are in a PUCCH group, which is denoted as a PUCCH group 2.

In the PUCCH group 1, the network device configures cell 1 to cell 4 as the first cell set, and configures cell 5 to cell 8 as the second cell set.

It is assumed that the first cell set and the second cell set correspond to the same search space set parameter and different values nCI of the CIF. The nCI of the first cell set is equal to 0, and the nCI of the second cell set is equal to 1. In Formula 1, assuming that Y is equal to 0, N is equal to 32, L is equal to 4, and M is equal to 4, then it is determined based Formula 1 that the PUCCH resource corresponding to the first cell set is the PDCCH in the gray part, and the PDCCH resource corresponding to the second cell set is the PDCCH in the white part (referring to FIG. 11). The PDCCH in the white part and the PDCCH resource in the gray part are different. In FIG. 11, 0 to 31 are serial numbers of the CCEs.

In the above embodiments, various pieces of DCI corresponding to different cell sets are distinguished based dimensions of the PUCCH resources, such that the scheduling cells corresponding to different cell sets are not limited to be the same, and the DCI overhead is saved. The first configuration parameters corresponding to different cell sets are configured by the network device, such that the PDCCH resources corresponding to different cell sets are not completely overlapped to distinguish different cell sets. It should be noted that the network device needs to coordinate more parameter configurations in the above embodiments, such that the requirement to the implementation algorithm of the configuration of the network device is high.

FIG. 19 is a structural block diagram of an apparatus for scheduling a data channel according to some embodiments of the present disclosure. The apparatus 600 for scheduling the data channel includes a receiving module 602.

The receiving module 602 is configured to receive first DCI, wherein the first DCI is used for scheduling N data channels, wherein the N data channels correspond to N cells in a first cell combination, N being a positive integer.

In some embodiments, the first DCI includes a cell combination indicator field, the cell combination indicator field indicates the first cell combination.

In some embodiments, the cell combination indicator field indicates the first cell combination from P cell combinations corresponding to a first cell set, wherein P is a positive integer.

In some embodiments, the number of bits of the cell combination indicator field is determined based on a number P of cell combinations corresponding to the first cell set.

In some embodiments, the first DCI includes a cell set indicator field, wherein the cell set indicator field indicates the first cell set from at least one cell set.

In some embodiments, the number of bits of the cell set indicator field is determined based on the number of the at least one cell set.

In some embodiments, the cell combination indicator field indicates the first cell combination from Q cell combinations corresponding to at least one cell set, wherein Q is a positive integer.

In some embodiments, the number of bits of the cell combination indicator field is determined based on a number Q of cell combinations corresponding to the at least one cell set.

In some embodiments, the cell combination indicator field further indicates a first cell set corresponding to the first cell combination.

In some embodiments, the at least one cell set belongs to a same PUCCH group.

In some embodiments, the apparatus further includes a determining module 604.

In some embodiments, the determining module 604 is configured to: determine the P cell combinations corresponding to the first cell set based on configuration information of a higher layer; or determine the P cell combinations corresponding to the first cell set based on a protocol predefinition mode; wherein P is a positive integer.

In some embodiments, the determining module 604 is configured to: determine the Q cell combinations corresponding to the at least one cell set based on configuration information of a higher layer; or determine the Q cell combinations corresponding to the at least one cell set based on a protocol predefinition mode; wherein Q is a positive integer.

In some embodiments, the determining module 604 is configured to: determine the Q cell combinations corresponding to the at least one cell set and a cell set corresponding to each of the Q cell combinations based on the configuration information of the higher layer; or determine the Q cell combinations corresponding to the at least one cell set and a cell set corresponding to each of the Q cell combinations based on the protocol predefinition mode; wherein Q is a positive integer.

In some embodiments, the at least one cell set includes at least two cell sets; and scheduling cells corresponding to cells in different cell sets are different, or, a scheduling cell corresponding to each cell in the at least two cell sets is one of cells in the at least two cell sets.

In some embodiments, the at least one cell set includes at least two cell sets, and the terminal does not anticipate that scheduling cells corresponding to cells in different cell sets are the same.

In some embodiments, the at least one cell set includes at least two cell sets; and candidate PDCCHs corresponding to different cell sets are different, first configuration parameters corresponding to different cell sets are different, candidate PDCCHs determined based on first configuration parameters corresponding to different cell sets are different, or, sizes of various pieces of DCI corresponding to different cell sets are the same; wherein first configuration parameters are used for determining candidate PDCCHs.

In some embodiments, the at least one cell set includes at least two cell sets; and the terminal does not anticipate that candidate PDCCHs corresponding to different cell sets are the same, the terminal does not anticipate that first configuration parameters corresponding to different cell sets are the same, the terminal does not anticipate that candidate PDCCHs determined based on first configuration parameters corresponding to different cell sets are the same, or, the terminal does not anticipate that sizes of various pieces of DCI corresponding to different cell sets are different; wherein first configuration parameters are used for determining candidate PDCCHs.

In some embodiments, the first configuration parameter includes at least one of a value of a Carrier Indicator field, a search space set parameter, or a control resource set parameter.

FIG. 20 is a structural block diagram of an apparatus for scheduling a data channel according to some embodiments of the present disclosure. The apparatus 700 for scheduling the data channel includes a receiving module 702.

The receiving module 702 is configured to transmit first DCI, wherein the first DCI is used for scheduling N data channels, wherein the N data channels correspond to N cells in a first cell combination, N being a positive integer.

In some embodiments, the first DCI includes a cell combination indicator field, the cell combination indicator field indicates the first cell combination.

In some embodiments, the cell combination indicator field indicates the first cell combination from P cell combinations corresponding to a first cell set, wherein P is a positive integer.

In some embodiments, the number of bits of the cell combination indicator field is determined based on a number P of cell combinations corresponding to the first cell set.

In some embodiments, the first DCI includes a cell set indicator field, wherein the cell set indicator field indicates the first cell set from at least one cell set.

In some embodiments, the number of bits of the cell set indicator field is determined based on the number of the at least one cell set.

In some embodiments, the cell combination indicator field indicates the first cell combination from Q cell combinations corresponding to at least one cell set, wherein Q is a positive integer.

In some embodiments, the number of bits of the cell combination indicator field is determined based on the number Q of cell combinations corresponding to the at least one cell set.

In some embodiments, the cell combination indicator field further indicates a first cell set corresponding to the first cell combination.

In some embodiments, the at least one cell set belongs to a same PUCCH group.

In some embodiments, the apparatus further incudes an indicating module 704.

In some embodiments, the indicating module 704 is configured to: indicate the P cell combinations corresponding to the first cell set based on configuration information of a higher layer; wherein P is a positive integer.

In some embodiments, the indicating module 704 is configured to: indicate the Q cell combinations corresponding to the at least one cell set based on configuration information of a higher layer; wherein Q is a positive integer.

In some embodiments, the indicating module 704 is configured to: indicate the Q cell combinations corresponding to the at least one cell set and a cell set corresponding to each of the Q cell combinations based on the configuration information of the higher layer; wherein Q is a positive integer.

In some embodiments, the at least one cell set includes at least two cell sets; and scheduling cells corresponding to cells in different cell sets are different, or, a scheduling cell corresponding to each cell in the at least two cell sets is one of cells in the at least two cell sets.

In some embodiments, the at least one cell set includes at least two cell sets, and the terminal does not anticipate that scheduling cells corresponding to cells in different cell sets are the same.

In some embodiments, the at least one cell set includes at least two cell sets; and candidate PDCCHs corresponding to different cell sets are different, first configuration parameters corresponding to different cell sets are different, candidate PDCCHs determined based on first configuration parameters corresponding to different cell sets are different, or, sizes of various pieces of DCI corresponding to different cell sets are the same; wherein first configuration parameters are used for determining candidate PDCCHs.

In some embodiments, the at least one cell set includes at least two cell sets; and the terminal does not anticipate that candidate PDCCHs corresponding to different cell sets are the same, the terminal does not anticipate that first configuration parameters corresponding to different cell sets are the same, the terminal does not anticipate that candidate PDCCHs determined based on first configuration parameters corresponding to different cell sets are the same, or, the terminal does not anticipate that sizes of various pieces of DCI corresponding to different cell sets are different; wherein first configuration parameters are used for determining candidate PDCCHs.

In some embodiments, the first configuration parameter includes at least one of a value of a Carrier Indicator field, a search space set parameter, or a control resource set parameter.

In some embodiments, the apparatus further incudes a generating module 706.

In some embodiments, the generating module 706 is configured to generate the first DCI, wherein the first DCI is used for scheduling N data channels, wherein the N data channels correspond to N cells in a first cell combination, N being a positive integer.

For the apparatus according to the above embodiments, the division of the functional modules is merely exemplary. In practical application, the functions may be assigned to different functional modules according to actual needs. That is, the internal structure of the device may be divided into different functional modules to implement all or a part of the functions.

With regard to the apparatus in the above embodiments, the specific manner in which each module performs the operation has been described in detail in the embodiments related to the method and will not be described in detail herein.

FIG. 21 is a schematic structural diagram of a communication device (a terminal or a network device) according to some embodiments of the present disclosure. The communication device 800 includes: a processor 801, a receiver 802, a transmitter 803, a memory 804, and a bus 805.

The processor 801 includes one or more processing cores, and achieves various functional applications and information processing by running software programs and modules. In some embodiments, the processor 801 is configured to achieve the function and processes of the receiving module 602 of the apparatus for scheduling the data channel 600 or the transmitting module 702 of the apparatus for scheduling the data channel 700.

The receiver 802 and the transmitter 803 are practiced as a communication assembly. The communication assembly is a communication chip. In some embodiments, the receiver 802 is configured to achieve the function and processes of the receiving module 602 of the apparatus for scheduling the data channel 600. In some embodiments, the transmitter 803 is configured to achieve the function and processes of the transmitting module 702 of the apparatus for scheduling the data channel 700.

The memory 804 is connected to the processor 801 over the bus 805. The memory 804 is configured to store one or more instructions, and the processor 801, when loading and executing the one or more instructions, is caused to perform various processes in the embodiments of the method for scheduling the data channel.

In addition, the memory 804 is practiced by any type of volatile or non-volatile storage device or combinations thereof. The volatile or non-volatile storage device includes but is not limited to a disk or optical disc, an electrically erasable programmable read-only memory (EEPROM), an erasable programmable read-only memory (EPROM), a persistent random-access memory (SRAM), a read-only memory (ROM), a magnetic memory, a flash memory, or a programmable read-only memory (PROM).

In some embodiments, the receiver 802 receives signal/data independently, the processor 801 controls the receiver 802 to receive signal/data, the processor 801 requests the receiver 802 to receive signal/data, or, the processor 801 cooperates with the receiver 802 to receive signal/data.

In some embodiments, the transmitter 803 transmits signal/data independently, the processor 2801 controls the transmitter 803 to transmit signal/data, the processor 801 requests the transmitter 803 to transmit signal/data, or, the processor 801 cooperates with the transmitter 803 to transmit signal/data.

Some embodiments of the present disclosure further provide a computer-readable storage medium storing one or more computer programs, wherein the one or more computer programs, when loaded and run by a processor, cause the processor to perform the method for scheduling the data channel in the above method embodiments.

Some embodiments of the present disclosure further provide a chip. The chip includes programmable logic circuity and/or program instructions, wherein the chip, when running on a communication device, is caused to perform the method for scheduling the data channel in the above method embodiments.

Some embodiments of the present disclosure further provide a computer program product. The computer program product, when running on a processor of a computer device, causes the computer device to perform the method for scheduling the data channel in the above method embodiments.

Some embodiments of the present disclosure further provide a computer program. The computer program includes one or more computer instructions, wherein the one or more computer instructions, when loaded and run on a processor of a computer device, cause the computer device to perform the method for scheduling the data channel in the above method embodiments.

It should be understood by those skilled in the art that in the above one or more embodiments, functions described in the embodiments of the present disclosure are practiced by the hardware, the software, the firmware or any combinations thereof. In the case that the functions are practiced by the software, the functions are stored in the computer-readable storage medium or are determined as one or more instructions or codes in the computer-readable storage medium for transmission. The computer-readable storage medium includes a computer storage medium and a communication medium, and the communication medium includes any medium facilitating transmission of the computer program from one place to another place. The storage medium is any available medium accessible by a general or specific computer.

## Claims

1. A terminal device, comprising: a processor, a transceiver connected to the processor, and a memory storing one or more executable instructions; wherein the processor, when loading and executing the one or more executable instructions cause the terminal device to:
receive first downlink control information, DCI, wherein the first DCI is used for scheduling N data channels, wherein the N data channels correspond to N cells in a first cell combination, N being a positive integer;
wherein the first DCI comprises:
a cell combination indicator field, wherein the cell combination indicator field indicates the first cell combination from P cell combinations corresponding to a first cell set, wherein P is a positive integer; and
a cell set indicator field, wherein the cell set indicator field indicates the first cell set from at least one cell set, and a number of bits of the cell set indicator field is determined based on a number of the at least one cell set.

2. The terminal device according to claim 1, wherein a number of bits of the cell combination indicator field is determined based on the number P of cell combinations corresponding to the first cell set.

3. The terminal device according to claim 1, wherein the number of bits of the cell set indicator field is determined based on log₂M, M being the number of the at least one cell set.

4. The terminal device according to claim 3, wherein the number of bits of the cell set indicator field is $\left⌈{log}_{2} M\right⌉$, M being a number of cell sets in a physical uplink control channel, PUCCH, group of the at least one cell set.

5. The terminal device according to claim 1 or 2, wherein the terminal device is further caused to:
determine the P cell combinations corresponding to the first cell set based on configuration information of a higher layer.

6. The terminal device according to claim 5, wherein the configuration information of the higher layer is configuration information in a radio resource control, RRC, layer.

7. The terminal device according to any one of claims 1 to 5, wherein the N data channels include N physical downlink shared channels, PDSCHs, the N PDSCHs being in one-to-one correspondence to the N cells in the first cell combination.

8. A network device, comprising: a processor, a transceiver connected to the processor, and a memory storing one or more executable instructions; wherein the processor, when loading and executing the one or more executable instructions cause the network device to:
transmit first downlink control information, DCI, wherein the first DCI is used for scheduling N data channels, wherein the N data channels correspond to N cells in a first cell combination, N being a positive integer;
wherein the first DCI comprises:
a cell combination indicator field, wherein the cell combination indicator field indicates the first cell combination from P cell combinations corresponding to a first cell set, wherein P is a positive integer; and
a cell set indicator field, wherein the cell set indicator field indicates the first cell set from at least one cell set, and a number of bits of the cell set indicator field is determined based on a number of the at least one cell set.

9. The network device according to claim 8, wherein a number of bits of the cell combination indicator field is determined based on the number P of cell combinations corresponding to the first cell set.

10. The network device according to claim 8, wherein the number of bits of the cell set indicator field is determined based on log₂M, M being the number of the at least one cell set.

11. The network device according to claim 10, wherein the number of bits of the cell set indicator field is $\left⌈{log}_{2} M\right⌉$, M being a number of cell sets **in** a physical uplink control channel, PUCCH, group of the at least one cell set.

12. The network device according to claim 8 or 9, wherein the network device is further caused to:
indicate the P cell combinations corresponding to the first cell set based on configuration information of a higher layer.

13. The network device according to claim 12, wherein the configuration information of the higher layer is configuration information **in** a radio resource control, RRC, layer.

14. The network device according to any one of claims 8 to 13, wherein the N data channels include N physical downlink shared channels, PDSCHs, the N PDSCHs being **in** one-to-one correspondence to the N cells **in** the first cell combination.
